(19) Europäisches Patentamt
European Patent Office
Office européen des brevets

(11) **EP 0 802 958 B1**

(12) **EUROPÄISCHE PATENTSCHRIFT**

(45) Veröffentlichungstag und Bekanntmachung des Hinweises auf die Patenterteilung:
**18.07.2001 Patentblatt 2001/29**

(51) Int Cl.[7]: **C09K 5/00**, C09K 5/06

(21) Anmeldenummer: **95941677.7**

(22) Anmeldetag: **06.12.1995**

(86) Internationale Anmeldenummer:
**PCT/EP95/04791**

(87) Internationale Veröffentlichungsnummer:
**WO 96/21706 (18.07.1996 Gazette 1996/33)**

(54) **WÄRMETRÄGERKONZENTRAT, VERFAHREN ZU DESSEN HERSTELLUNG SOWIE DESSEN VERWENDUNG UND LATENTWÄRMESPEICHER**

HEAT-TRANSFER CONCENTRATE, METHOD OF MANUFACTURING IT AND ITS USE, AS WELL AS A LATENT-HEAT ACCUMULATOR MAKING USE OF THE CONCENTRATE

CONCENTRE CALOPORTEUR, SON PROCEDE DE PRODUCTION ET SON UTILISATION, ET ACCUMULATEUR DE CHALEUR LATENTE

(84) Benannte Vertragsstaaten:
**AT BE CH DE DK ES FR GB GR IE IT LI LU MC NL PT SE**

(30) Priorität: **14.01.1995 DE 19500949**
**05.04.1995 DE 19512656**

(43) Veröffentlichungstag der Anmeldung:
**29.10.1997 Patentblatt 1997/44**

(73) Patentinhaber:
• **Daume, Jochen**
**42659 Solingen (DE)**
• **Bauer, Heinrich**
**67661 Kaiserslautern (DE)**
• **Grimm, Arnold**
**D-36124 Eichenzell (DE)**

(72) Erfinder:
• **Daume, Jochen**
**42659 Solingen (DE)**
• **Bauer, Heinrich**
**67661 Kaiserslautern (DE)**
• **Grimm, Arnold**
**D-36124 Eichenzell (DE)**

(74) Vertreter: **Patentanwälte Dr. Solf & Zapf**
**Postfach 13 01 13**
**42028 Wuppertal (DE)**

(56) Entgegenhaltungen:
EP-A- 0 024 498          EP-A- 0 342 141
GB-A- 1 087 470          US-A- 3 882 033

EP 0 802 958 B1

## Beschreibung

Die Erfindung betrifft ein Wärmeträgerkonzentrat, ein Verfahren zu dessen Herstellung sowie dessen Verwendung für die thermochemische Energiespeicherung, zur Realisierung von chemischen Wärmepumpen oder zur chemischen Wärmetransformation und betrifft ferner einen Latentwärmespeicher.

Bei der direkten Nutzung der Sonnenenergie, beispielsweise der Gewinnung von Wärme durch Sonnenkollektoren ist die wirtschaftliche Speicherung von Wärme (und anderer Energie) in Wärmespeichern, in denen fühlbare oder latente Wärme speicherbar ist, eine zentrale Frage, da die Wärmeverluste mit zunehmender Speicherzeit zunehmen. So stellt zur Speicherung von fühlbarer Wärme Wasser das einfachste Speichermedium dar, ist jedoch für Langzeitspeicher unwirtschaftlich. Andere Speichermedien sind Latentwärmespeicher, welche die bei Phasenübergängen aufgenommenen und abgegebenen Latentwärmen, wie Schmelzwärme, Verdampfungswärme und Kristallisationswärme, verwenden.

Latentwärmespeicher sind bekannt und enthalten als Wärmespeichermedien Wasser, Glaubersalz, natürlichen Stein und künstlichen Stein bzw. gebrannte Tonerden, wie z.B. Schamottsteine. Zwar besitzt Wasser mit einer spezifischen Wärmekapazität von 4,18 kJ/kg·K (Kilo-Joule pro Kilogramm x Kelvin) die höchste spezifische Wärmekapazität aller Elemente, jedoch ist eine Speichertemperatur von über 82°C problematisch, da ab dieser Temperatur die im Wasser gelösten Mineralien ausfällen und sich als sogenannter Kesselstein absetzen. Aufgrund des Siedepunkts von 100°C bei Normaldruck und dem damit ansteigenden Dampfdruck ergeben sich Druckprobleme mit ansteigender Temperatur.

Bei Glaubersalz ist bei der Wärmespeicherung zusätzlich die Schmelz- bzw. die Erstarrungswärme bei der Änderung des Aggregatszustandes von fest zu flüssig bzw. umgekehrt von flüssig zu fest zu berücksichtigen. Jedoch erlaubt Glaubersalz nur eine begrenzte Anzahl an Aggregatszustandsänderungen. Danach verbleibt es im flüssigen Zustand.

Bei natürlichen Gesteinsmaterialien, wie z.B. Basalt, oder künstlichen Steinen oder gebrannten Tonerden, wie z.B. Schamottsteinen, ist der Einsatz als Wärmespeicher aufgrund der geringen spezifischen Wärmekapazität auf hohe Temperaturen begrenzt.

Es sind Wärmeträgerflüssigkeiten (WFT) mit Zusatz von Metallstäuben bekannt, die jedoch beispielsweise in der chemischen Industrie in chemischen Reaktoren mit Wärmetauschern nicht eingesetzt werden dürfen, da im Falle eines Rohrbruches eine hohe Explosionsgefahr durch die feinen Metallpartikel besteht und insbesondere Metallpartikel, wie Blei oder Quecksilber, wegen ihrer hohen Toxizität nicht ins Erdreich gelangen dürfen.

Der Erfindung liegt die Aufgabe zugrunde, ein Wärmeträgerkonzentrat für Wärmeträgermedien zur Speicherung oder für den Transport von Wärme zu schaffen, welches eine kostengünstige Speicherung von Wärme ermöglicht, stabil, ungiftig und nicht explosiv ist, sowie ein Verfahren zu dessen Herstellung sowie dessen Verwendung anzugeben und einen Latentwärmespeicher mit hoher Kapazität zu schaffen.

Gegenstand der Erfindung ist daher ein Wärmeträgerkonzentrat, gekennzeichnet durch eine lagerstabile Dispersion aus einem Wärmeträgermedium und auf mindestens einem feinteiligen und/oder hochporösem Feststoff adsorbiertem Gallium.

Ein weiterer Gegenstand der Erfindung ist ein Verfahren zur Herstellung dieses Wärmeträgerkonzentrats, das dadurch gekennzeichnet ist, daß ein Wärmeträgermedium mit mindestens einem feinteiligen und/oder hochporösem Feststoff und Gallium, vorzugsweise in flüssiger Form, gemischt und in der resultierenden Mischung durch Einwirkung einer hohen Mischenergie, z.B. unter Verwendung eines Hochgeschwindigkeitshomogenisators, Gallium zur homogenen Adsorption an den feinteiligen und/oder hochporösen Feststoff gebracht wird, und die mit Gallium beladenen Feststoffteilchen homogen dispergiert werden.

Ein weiterer Gegenstand der Erfindung ist eine Wärmeträgermischung, welche aus dem erfindungsgemäß hergestellten Wärmeträgerkonzentrat sowie einem Wärmeträgermedium hergestellt wird.

Ein weiterer Gegenstand der Erfindung ist die Verwendung der erfindungsgemäßen Wärmeträgerkonzentrate in Wärmeträgermischungen für die Speicherung und den Transport von Wärme in Reaktoren mit Wärmeaustauschern, für den Einsatz bei Wärmepumpen und als Medium zur thermochemischen Energiespeicherung.

Ein weiterer Gegenstand der Erfindung ist ein Latentwärmespeicher, umfassend einen Speicherbehälter 1, einen primären Heizkreis 2, einen sekundären Heizkreis 3 zum Entnehmen der in einem Wärmespeichermedium 4 latent gespeicherten Wärme, der dadurch gekennzeichnet ist, daß das Wärmespeichermedium 4 aus einer erfindungsgemäßen Wärmeträgermischung, umfassend das erfindungsgemäße Wärmeträgerkonzentrat und ein Wärmeträgermedium, besteht.

Prinzipiell lassen sich alle dem Fachmann bekannten Wärmeträgermedien verwenden, solange das Gallium in Gegenwart eines feinteiligen und/oder hochporösen Feststoffs in genügend hohem Maße darin eindispergierbar ist. Insbesondere lassen sich die bekannten flüssigen, kristallinen oder pastösen Glykole, niedrigviskosen Silikonöle und synthetischen Öle als Wärmeträgermedien verwenden.

In der Erfindung wurde erkannt, daß sich Gallium in Gegenwart von feinteiligen und/oder hochporösen Feststoffen unter Ausbildung einer stabilen Dispersion in Wärmemedien eindispergieren lassen.

Vorzugsweise werden als Feststoffe Zeolithe verwendet, insbesondere solche deren Teilchendurchmesser in einem Bereich von 1 bis 3 µm, insbesondere von 1,5 bis 2,1 µm liegt und deren Porendurchmesser in einem Bereich von 0,2 bis 0,6 nm, insbesondere von 0,3 bis 0,5 nm liegt. Vorzugsweise läßt sich auch hydrophiles oder hydrophobes Siliciumdioxid oder eine Mischung davon einsetzen. Als extrem feinteiliges hydrophiles oder hydrophobes Siliciumdioxid wird im Handel erhältliches AEROSIL, bestehend aus kugelförmigen Teilchen, verwendet. Dieses AEROSIL kann in Form einer wäßrigen Dispersion oder als trockenes Pulver eingesetzt werden.

Als feinteiliger und/oder hochporöser Feststoff sind vorzugsweise auch fein gemahlene Silikate, Aluminate und gemahlene Kunststoffe einsetzbar.

Bei Einsatz von beispielsweise kristallinen Polyethylenglykolen als Wärmeträgermedium für einen Latentwärmespeicher wird das Wärmeträgerkonzentrat hergestellt, indem zunächst kristallines Polyethylenglykol über seinen Schmelzpunkt erhitzt wird und in die flüssige Glykolphase anschließend das Gallium gemäß dem erfindungsgemäßen Verfahren unter Verwendung eines Hochgeschwindigkeitshomogenisators bei 18.000 UpM eindispergiert wird. Für den Einsatz in beispielsweise einem Latentwärmespeicher kann dieses Wärmeträgerkonzentrat auch mit anderen kristallinen Glykolen, welche auch eine höhere Schmelztemperatur besitzen können, als das zur Herstellung des Wärmeträgerkonzentrats verwendete kristalline Glykol, unter Herstellung einer Wärmeträgermischung vermischt werden. Ist ein weiches bzw. pastöses Wärmeträgerkonzentrat erwünscht, kann zum Dispergieren nur ein niedrigviskoses, also flüssiges Glykol verwendet werden und dieses anschließend mit kristallinem Glykol vermischt werden. Je nach Molmasse des Glykols wird unter flüssigen, weichen, pastösen oder hartwachsigen Produkten unterschieden. Flüssige Glykole besitzen eine Molmasse zwischen 190 bis 630 g/Mol. Weiche bis hartwachsige Glykole besitzen eine Molmasse von 950 bis 35 000 g/Mol. Eine Mischung von Glykolen unterschiedlicher molarer Massen ist einsetzbar und läßt sich gemäß der Formel:

$$\text{Molare Masse} = \frac{56\ 110 \times 2}{\text{OHZ}}$$

berechnen, wobei OHZ die Hydroxylzahl bedeutet.

Der Einsatz von Glykolen als Wärmeträgermedium in Latentwärmespeichern führt im Vergleich zu Wasser zu einer wesentlich höheren Gesamtspeicherwärme, wie ein Vergleich von beispielsweise kristallinen Polyethylenglykolen mit Wasser zeigt.

Kristalline Polyethylenglykole (PEG), die weder toxisch noch flüchtig sind, besitzen eine spezifische Wärmekapazität im Bereich von 2,1 bis 2,5 kJ/kgK. Eine Menge von 1 000 kg PEG läßt sich ohne das Auftreten technischer Probleme auf 180°C beliebig oft aufheizen und wieder abkühlen, ohne die Fähigkeit des Aggregatszustandwechsels zu verlieren. Hierbei läßt sich eine Wärmemenge von maximal 400 Mega-Joule (bei 20°C Ausgangstemperatur) speichern. Berücksichtigt man, daß bei Entnahme der gespeicherten Wärme zusätzlich die beim Phasenübergang flüssig-fest freiwerdende Schmelz- bzw. Erstarrungswärme von 167 bis 212 kJ/kg gewonnen wird, läßt sich mit 1 000 kg Speichermedium bestehend aus PEG eine Gesamtspeicherwärme von 612 MJ = 170 kWh gewinnen. Wasser kann dagegen mit der gleichen Menge von 1 000 kg und einer Fülltemperatur von 12°C und einer Endtemperatur von 82°C nur 293 MJ = 81,454 kWh speichern.

Der Nachteil der geringeren Wärmeleitfähigkeit der Glykole (0,22W/mK) im Vergleich zu Wasser (0,57W/mK) wird durch das Vorhandensein von dispergiertem Gallium in dem erfindungsgemäßen Wärmeträgerkonzentrat, das später mit einem Wärmeträgermedium der gleichen Art vermischt werden soll, nicht nur behoben, sondern die Wärmeleitfähigkeit des Wärmeträgermediums wird im Vergleich zu Wasser je nach Anreichungsgrad mit Gallium höher einstellbar (> 1W/mK). Um die Zusatzmengen des erfindungsgemäßen Wärmeträgerkonzentrats zum Wärmeträgermedium bei der Herstellung von erfindungsgemäßen Wärmeträgermischungen möglichst gering zu halten, soll das erfindungsgemäße Wärmeträgerkonzentrat einen möglichst hohen Anteil an Gallium enthalten. Das heißt, beim erfindungsgemäßen Verfahren zur Herstellung des Wärmeträgerkonzentrats kann bis zur Sättigung mit Gallium in Gegenwart von feinteiligen und/oder hochporösen Feststoffen in das Wärmeträgermedium eindispergiert werden.

Bei Herstellung von Wärmeträgerkonzentraten unter Verwendung beispielsweise flüssiger Glykole kann das Eindispergieren in Gegenwart von Dispergierhilfsmitteln erfolgen. Die Auswahl der Dispergierhilfsmittel erfolgt in Abhängigkeit von dem Wärmeträgermedium, mit dem später das erfindungsgemäße Wärmeträgerkonzentrat vermischt werden soll. Soll also beispielsweise der Latentwärmespeicher mit flüssigen Glykolen betrieben werden, so eignen sich als Dispergierhilfsmittel beispielsweise niedrigviskose Glykole, wie Diethylenglykol oder Triethylenglykol oder Glykolether wie beispielsweise Ethylenglykolmonobutylether. Werden Silikonöle bzw. synthetische Öle als Wärmeträgermedien für den Einsatz im Latentwärmespeicher gewählt, dann eignen sich als Dispergierhilfsmittel niedrigviskose Silikonöle, wie beispielsweise Baysilon M5 oder M50 der Firma Bayer AG oder bei Verwendung synthetischer Öle Wärmeträgeröle wie Transal 593 von BP, Marlotherm der Firma Hüls AG oder Santotherm der Firma Monsanto, die dann mit entsprechend höher viskosen Silikonölen bzw. synthetischen Ölen gemischt werden können.

Bei der Herstellung einer Wärmeträgermischung aus dem erfindungsgemäßen Wärmeträgerkonzentrat und einem Wärmeträgermedium ist die Gesamtmenge des Galliums in der Wärmeträgermischung nicht kritisch und es können prinzipiell beliebige Mischungen aus erfindungsgemäßem Wärmeträgerkonzentrat und Wärmeträgermedium eingestellt werden, jedoch wurden vorteilhafte Ergebnisse erhalten, wenn die Wärmeträgermischung so hergestellt wurde, daß in einem Liter Wärmeträgermedium 2 bis 8 g erfindungsgemäßes Wärmeträgerkonzentrat, welches etwa 50 Gew.-% oder mehr Gallium enthält, enthalten sind.

Überraschenderweise wurde festgestellt, daß sich das Metall Gallium mit einem niedrigen Schmelzpunkt von 29,6°C in Wärmeträgermedien, vorzugsweise in Glykolen, niedrigviskosen Silikonölen und synthetischen Ölen in Gegenwart von feinteiligen und/oder hochporösen Feststoffen mit einem Hochgeschwindigkeitshomogenisator zu einer lagerstabilen Dispersion verarbeiten läßt.

Um eine homogene Dispersion zu erhalten, beträgt die Geschwindigkeit des Mahlflügels des Hochgeschwindigkeitshomogenisators etwa 18 000 UpM.

Die Dispergierzeit im Homogenisator beträgt vorzugsweise 5 Minuten.

Das erfindungsgemäße Wärmeträgerkonzentrat läßt sich noch weiter stabilisieren durch Zusatz von anionischen und/oder kationischen Tensiden, Polyacrylsäuren und Gelen, welche im Rohzustand von z.B. einer Wärmeträgerflüssigkeit eine Gitterstruktur aufbauen, wobei im bewegten Zustand das Gitter zusammenbricht, jedoch die Viskosität der Wärmeträgerflüssigkeit nicht beeinflußt wird.

Obwohl es bei Verwendung von Zeolithen für eine zusätzliche Stabilisierung der Dispersion des erfindungsgemäßen Wärmeträgerkonzentrats vorteilhaft ist, Rhodopol (ein anionisches Polymer), das in Ethylenglykol bei 65°C löslich ist, Guar-Mehl und/oder Johannisbrotkernmehl zu verwenden, insbesondere in einem Gewichtsverhältnis von Rhodopol zu Johannisbrotkernmehl von 60:40, ist der Zusatz weiterer Stabilisierungsmittel bei Verwendung von extrem feinteiligem und hydrophilem und/oder hydrophobem Siliciumdioxid nicht erforderlich, da auch ohne weitere Stabilisierungsmittel schon eine sehr gute Lagerstabilität der Galliumdispersion erzielt wird.

Wie mikroskopische Untersuchungen zeigten, wird beim Dispergieren des Galliums in Gegenwart von Zeolithen in der Wärmeträgerflüssigkeit das Gallium durch die Poren der Zeolithe gepreßt, und dabei werden die Zeolithpartikel von den Galliumteilchen in extrem dünner Wandstärke umhüllt, so daß sich eine kaum meßbare Vergrößerung der Zeolithpartikel ergibt.

Bei der Herstellung des Wärmeträgerkonzentrats läßt sich nach einer weiteren Ausführungsform der Erfindung auch Graphitpulver mit einer Korngröße von $\leq$ 5µm zur Verbesserung der Wärmeleitfähigkeit eindispergieren. Das Graphitpulver kann bei der Herstellung des erfindungsgemäßen Wärmeträgerkonzentrats dem Homogenisator zugeführt und bei ca. 18 000 UpM eindispergiert werden. Bei Verwendung von kristallinen Glykolen werden diese zuvor geschmolzen, wonach das Eindispergieren erfolgt.

Da insbesondere der Einsatz von kristallinen Glykolen (PEG) Temperaturen von über 100°C zuläßt, kann zur Verhinderung der Oxidation der Glykole ein Oxidationsstabilisator zugegeben werden. Dieser kann ausgewählt werden aus Trimethyldihydrochinolin, Diphenylaminderivaten, Phenothiazin und Phenyl-$\alpha$-naphthylamin.

Bei einer weiteren vorteilhaften Ausgestaltung der Erfindung kann das Wärmeträgerkonzentrat auch eine Galliumlegierung enthalten, insbesondere kann durch Wahl einer geeigneten Galliumlegierung deren Schmelzpunkt so eingestellt werden, daß dieser mit dem Schmelzpunkt eines als Wärmeträgermedium beispielsweise eingesetzten kristallinen Glykols übereinstimmt oder dieser im mittleren oder höheren Arbeitstemperaturbereich des Wärmeträgermediums eines Kollektors liegt, so daß zusätzlich bei der Energienentnahme aus dem Latentwärmespeicher neben der Erstarrungswärme des kristallinen Glykols auch noch die Erstarrungswärme für die Galliumlegierung gewonnen werden kann.

Bei der Herstellung des erfindungsgemäßen Wärmeträgerkonzentrats wird beobachtet, daß während der ersten 5 Minuten der Homogenisierung des Galliums von z.B. in Gegenwart von Zeolithen in den Wärmeträgerflüssigkeiten ein linearer Temperaturanstieg erfolgt, während nach ca. 5,5 Minuten ein annähernd exponentiell verlaufender Temperaturanstieg festzustellen ist. Dieses Phänomen wird auf das Auftreten der Adsorptionswärme beim Adsorbieren von Gallium an die Zeolithe zurückgeführt und ist auch für extrem feinteiliges hydrophiles und/oder hydrophobes Siliciumdioxid oder andere feinteilige Feststoffe zu erwarten. Der Zeitpunkt des Auftretens der Adsorptionswärme wird dabei von der Rührenergie (Umdrehungen/Minute), der Masse der Zeolithe, der Masse des Galliums und der Viskosität der Wärmeträgerflüssigkeiten bestimmt.

Da durch Wärmezufuhr in einem Wärmetauscher eine Desorption von Gallium aus den Zeolithen erfolgt - dies ist auch für andere feinteilige und/oder hochporöse Feststoffe zu erwarten - läßt sich die erfindungsgemäße Wärmeträgermischung auch vorteilhaft für die thermochemische Energiespeicherung einsetzen.

Der Einsatz der erfindungsgemäßen Wärmeträgermischung in Wärmepumpen ist erfolgversprechend, da aufgrund der niedrigen Schmelztemperatur von 29,6°C eine zusätzliche Energiegewinnung aus der Schmelzwärme (Erstarrungswärme) erzielbar ist.

Die erfindungsgemäße Wärmeträgermischung läßt sich für die Speicherung und den Transport von Wärme in Reaktoren mit Wärmeaustauschern und für den Einsatz in Wärmepumpen verwenden.

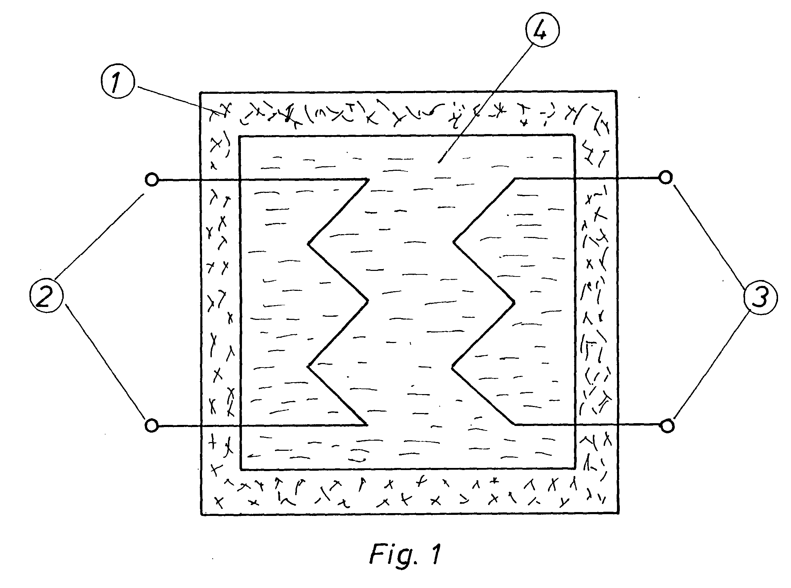

Ein erfindungsgemäßer Latentwärmespeicher ist in Fig. 1 dargestellt und umfaßt einen Speicherbehälter 1, einen primären Heizkreis 2, einen sekundären Heizkreis 3 zum Entnehmen der in einem Wärmespeichermedium 4 latent gespeicherten Wärme, wobei das Wärmespeichermedium 4 aus einer erfindungsgemäßen Wärmeträgermischung besteht, umfassend das erfindungsgemäße Wärmeträgerkonzentrat in Mischung mit einem Wärmeträgermedium, welches vorzugsweise aus flüssigen, kristallinen oder pastösen Glykolen, niedrigviskosen Silikonölen und synthetischen Ölen ausgewählt sein kann.

Im folgenden wird die Erfindung anhand von Beispielen näher erläutert.

Beispiel 1:

Herstellung eines Wärmeträgerkonzentrats für die Verwendung in einem Wärmeträgermedium auf Glykolbasis:

Basiert das Wärmeträgermedium auf Glykol, so wird Ethylenglykolmonobutylether in Kombination mit Diethylenglykol und/oder Triethylenglykol als Dispergierflüssigkeit (Wärmeträgerflüssigkeit) beispielsweise in folgenden Mengen in. einen Homogenisator mit einem Fassungsvermögen von 1 Liter eingefüllt:

| | |
|---|---:|
| Triethylenglykol | 200 ml |
| Ethylenglykolmonobutylether | 50 ml |
| Zeolith mit einer Teilchengröße von < 4µm und einer Porengröße von etwa 0,4nm (Wessalith NP von Degussa) | 20 g |
| Kieselsäure (z.B. Aerosil von Degussa) | 2 g |
| Gallium | 200 g |

Um eine homogene Dispersion zu erhalten wird die Geschwindigkeit des Mahlflügels des Hochgeschwindigkeitshomogenisators auf etwa 18 000 UpM eingestellt. Die Dispergierzeit im Homogenisator beträgt vorzugsweise 5 Minuten.

Dieses Wärmeträgerkonzentrat wird dann je nach gewünschtem Anreicherungsgrad in Mengen von beispielsweise 2, 4 oder 8g oder mehr pro Liter eines auszuwählenden Wärmeträgermediums auf Glykolbasis zugesetzt. Solch ein Wärmeträgermedium kann beispielsweise Glythermin P44, Glythermin NF oder Glythermin 200 der Firma BASF sein. Durch Zumischung des erfindungsgemäßen Wärmeträgerkonzentrats zu einem Wärmeträgermedium wird eine erfindungsgemäße Wärmeträgermischung erhalten, die beispielsweise in einem Latentwärmespeicher einsetzbar ist.

Zur weiteren Lagerstabilisierung der Galliumpartikel in dem einsatzfähigen niedrigviskosen Wärmeträgermedium kann beispielsweise noch ein anionisches Polymer, beispielsweise Rhodopol Xanthan in einer Menge von 0,5g pro Liter Wärmeträgermedium beigemischt werden. Das Mischen des erfindungsgemäßen Wärmeträgerkonzentrats mit einem Wärmeträgermedium kann dabei mit einem üblichen Rührgerät vorgenommen werden, das heißt, es ist keine Homogenisierung des Konzentrats mit der Wärmeträgermischung in einem Hochgeschwindigkeitshomogenisator mehr notwendig.

Wird pastöses oder kristallines Glykol, beispielsweise Polyethylenglykol (PEG) als Wärmeträgermedium in einem Latentwärmespeicher zur Wärmeenergiespeicherung verwendet, so wird die Dispergierung des Galliums wie oben beschrieben vorgenommen. Das niedrigviskose Glykol, wie Diethylenglykol oder Triethylenglykol, beeinträchtigt die molare Masse von PEG nur unwesentlich, so daß der Vorteil der höheren Wärmespeicherung durch das PEG wegen der zu berücksichtigenden Schmelz- bzw. Erstarrungswärme von 167 bis 207 kJ/kg Glykol beim Phasenübergang weitgehend erhalten und ausgenutzt werden kann. Während sich gezeigt hat, daß Mengen von 2 bis 8g des erfindungsgemäßen Wärmeträgerkonzentrats - mit einem Gewichtsanteil von etwa 50 Gew.-% oder mehr Gallium - pro Liter Wärmeträgermedium zu einer ausreichenden Erhöhung der Wärmeleitfähigkeit von beispielsweise kristallinen Glykolen führt, liegt es im Belieben des Fachmanns hier auch andere Bereiche auszuwählen. Zusätzlich kann auch Graphit mit einer Partikelgröße von < 5µm in das erfindungsgemäße Wärmeträgerkonzentrat oder in die erfindungsgemäße Wärmeträgermischung eingearbeitet werden.

Beispiel 2:

Wärmeträgerkonzentrat auf Silikonölbasis:

| | |
|---|---:|
| Silikonöl (Baysilon M5) | 200 ml |
| Zeolith mit einer Teilchengröße von < 4µm und einer Porengröße von etwa 0,4nm (Wessalith NP von Degussa) | 20 g |

(fortgesetzt)

| Kieselsäure (z.B. Aerosil von Degussa) | 2 g |
| Gallium | 200 g |

Dieses nach der Behandlung im Hochgeschwindigkeitshomogenisator wie in Beispiel 1 erhaltene Konzentrat läßt sich dann wieder mit weiteren im Handel erhältlichen üblichen Silikonölen zu einer erfindungsgemäßen Wärmeträgermischung verarbeiten.

Beispiel 3:

Konzentrat auf Wärmeträgerölbasis (synthetische Öle):
Es wird auf die gleiche Weise wie in Beispiel 1 verfahren, jedoch wird als Dispergierflüssigkeit ein Wärmeträgeröl verwendet, in welches das Gallium zur Herstellung eines erfindungsgemäßen Wärmeträgerkonzentrats eindispergiert wird. Als Dispergierflüssigkeit sind Wärmeträgeröle wie Transal 593 von BP, Marlotherm der Firma Hüls AG oder Santhotherm der Firma Monsanto geeignet.

Beispiel 4:

Herstellung einer Wärmeträgerflüssigkeit mit darin stabil eindispergiertem Gallium:
Obwohl es einfacher ist, eine erfindungsgemäße Wärmeträgermischung durch Mischen eines erfindungsgemäßen Wärmeträgerkonzentrats mit einem Wärmeträgermedium herzustellen, läßt sich eine stabile Dispersion aus einem Wärmeträgermedium und Gallium auch direkt herstellen (geeignet, falls geringe Mengen gewünscht werden), ohne zuvor das erfindungsgemäße Wärmeträgerkonzentrat herzustellen.
Hierzu werden zu 200ml Wärmeträgerflüssigkeit (Glykol) im Laborversuch 4g Zeolith und 5 Tropfen Gallium mit Hilfe einer Pipette zugegeben. Das Gewicht des Galliums beträgt etwa 1g. Anschließend wird mit einem Hochgeschwindigkeitshomogenisator bei 18.000 UpM dispergiert, bis nach der Dispergierzeit von 5 Minuten die Wärmeträgerflüssigkeit anthrazitschwarz gleichmäßig gefärbt ist. Es ergibt sich eine Oberflächenverteilung der Galliumteilchen von ca. 2.000 m$^2$.
Bei einem anderen Laborversuch werden zu 200ml Wärmeträgerflüssigkeit (niedrigviskoses Silikonöl) 0,8g extrem feinteiliges hydrophobes Siliciumdioxid (AEROSOL) und 5 Tropfen Gallium mit Hilfe einer Pipette zugegeben. Das Gewicht des Galliums beträgt etwa 1g. Anschließend wird mit einem Hochgeschwindigkeitshomogenisator bei 18.000 UpM dispergiert, bis nach einer Dispergierzeit von 5 Minuten die Wärmeträgerflüssigkeit anthrazitschwarz gleichmäßig gefärbt ist. Es ergibt sich eine stabile Galliumdispersion.

**Patentansprüche**

1. Wärmeträgerkonzentrat,
   **gekennzeichnet durch** eine lagerstabile Dispersion aus einem Wärmeträgermedium und auf mindestens einem feinteiligen und/oder hochporösem Feststoff adsorbiertem Gallium.

2. Wärmeträgerkonzentrat nach Anspruch 1,
   **dadurch gekennzeichnet,** daß das Wärmeträgermedium ausgewählt ist aus flüssigen, kristallinen oder pastösen Glykolen, niedrigviskosen Silikonölen und synthetischen Ölen.

3. Wärmeträgerkonzentrat nach Anspruch 1 oder 2,
   **dadurch gekennzeichnet,** daß es als Feststoff Zeolithe enthält.

4. Wärmeträgerkonzentrat nach Anspruch 3,
   **dadurch gekennzeichnet,** daß die Zeolithe einen Teilchendurchmesser von 1 bis 3 μm, insbesondere von 1,5 μm bis 2,1 μm besitzen.

5. Wärmeträgerkonzentrat nach Anspruch 3 oder 4,
   **dadurch gekennzeichnet,** daß die Zeolithe einen Porendurchmesser von 0,2 bis 0,6 nm, insbesondere von 0,3 bis 0,5 nm besitzen.

6. Wärmeträgerkonzentrat nach einem oder mehreren der Ansprüche 1 bis 5,
**dadurch gekennzeichnet,** daß es als Feststoff hydrophiles oder hydrophobes Siliciumdioxid oder eine Mischung davon enthält.

7. Wärmeträgerkonzentrat nach einem oder mehreren der Ansprüche 1 bis 6,
**dadurch gekennzeichnet,** daß es als Feststoff Silikate enthält.

8. Wärmeträgerkonzentrat nach einem oder mehreren der Ansprüche 1 bis 7,
**dadurch gekennzeichnet,** daß es als Feststoff Aluminate enthält.

9. Wärmeträgerkonzentrat nach einem oder mehreren der Ansprüche 1 bis 8,
**dadurch gekennzeichnet,** daß es als Feststoff gemahlene Kunststoffe enthält.

10. Wärmeträgerkonzentrat nach einem oder mehreren der Ansprüche 1 bis 9,
**dadurch gekennzeichnet,** daß es weiterhin ein Stabilisierungsmittel und/oder ein Dispergierhilfsmittel enthält.

11. Wärmeträgerkonzentrat nach Anspruch 10,
**dadurch gekennzeichnet,** daß das Stabilisierungsmittel ausgewählt ist aus anionischen und/oder kationischen Tensiden, Polyacrylsäuren und Gelen und das Dispergierhilfsmittel ein niedrigviskoses Glykol, ein Glykolether oder ein niedrigviskoses Silikonöl ist.

12. Wärmeträgerkonzentrat nach Anspruch 10 oder 11,
**dadurch gekennzeichnet**, daß das Stabilisierungsmittel, Guar-Mehl und/oder Johannisbrotkernmehl ist und das Dispergierhilfsmittel Triethylenglykol oder Ethylenglykolmonobutylether ist.

13. Wärmeträgerkonzentrat nach einem oder mehreren der Ansprüche 1 bis 12,
**dadurch gekennzeichnet**, daß es zusätzlich Graphitpartikel enthält.

14. Wärmeträgerkonzentrat nach Anspruch 13,
**dadurch gekennzeichnet,** daß die Graphitpartikel eine Korngröße von < 5µm besitzen.

15. Wärmeträgerkonzentrat nach einem oder mehreren der Ansprüche 1 bis 14,
**dadurch gekennzeichnet,** daß es einen Oxidationsstabilisator enthält.

16. Wärmeträgerkonzentrat nach Anspruch 15,
**dadurch gekennzeichnet,** daß der Oxidationsstabilisator ausgewählt ist aus Trimethyldihydrochinolin, Diphenyl-aminderivaten, Phenothiazin und Phenyl-$\alpha$-naphthylamin.

17. Wärmeträgerkonzentrat nach einem oder mehreren der Ansprüche 1 bis 16,
**dadurch gekennzeichnet,** daß es eine Galliumlegierung enthält.

18. Wärmeträgerkonzentrat nach Anspruch 17,
**dadurch gekennzeichnet,** daß der Schmelzpunkt der Galliumlegierung mit dem Schmelzpunkt eines als Wärmeträgermedium eingesetzten kristallinen Glykols übereinstimmt, oder im mittleren oder höheren Arbeitstemperaturbereich des Wärmeträgermediums eines Kollektors liegt.

19. Wärmeträgerkonzentrat nach einem oder mehreren der Ansprüche 2 bis 18,
**dadurch gekennzeichnet,** daß das kristalline Glykol Polyethylenglykol (PEG) ist.

20. Verfahren zur Herstellung eines Wärmeträgerkonzentrats nach einem oder mehreren der Ansprüche 1 bis 19, insbesondere nach Anspruch 1,
**dadurch gekennzeichnet,** daß ein Wärmeträgermedium mit mindestens einem feinteiligen und/oder hochporösem Feststoff und Gallium, vorzugsweise in flüssiger Form, gemischt und in der resultierenden Mischung durch Einwirkung einer hohen Mischenergie, z.B. unter Verwendung eines Hochgeschwindigkeitshomogenisators, Gallium zur homogenen Adsorption an den feinteiligen und/oder hochporösen Feststoff gebracht wird, und die mit Gallium beladenen feinteiligen und/oder hochporösen Feststoffteilchen homogen dispergiert werden.

21. Verfahren nach Anspruch 20,

**dadurch gekennzeichnet,** daß als Wärmeträgermedium flüssige, kristalline oder pastöse Glykole, niedrigviskose Silikonöle und synthetische Öle verwendet werden.

22. Verfahren nach Anspruch 20 oder 21,
    **dadurch gekennzeichnet,** daß als Feststoff Zeolithe verwendet werden.

23. Verfahren nach Anspruch 22,
    **dadurch gekennzeichnet,** daß Zeolithe verwendet werden, welche einen Teilchendurchmesser von 1 bis 3 μm, insbesondere von 1,5 bis 2,1 μm besitzen.

24. Verfahren nach Anspruch 22 oder 23,
    **dadurch gekennzeichnet,** daß Zeolithe verwendet werden, welche einen Porendurchmesser von 0,2 bis 0,6 nm, insbesondere von 0,3 bis 0,5 nm besitzen.

25. Verfahren nach einem oder mehreren der Ansprüche 20 bis 24,
    **dadurch gekennzeichnet,** daß als Feststoff hydrophiles oder hydrophobes Siliciumdioxid oder eine Mischung davon verwendet wird.

26. Verfahren nach einem oder mehreren der Ansprüche 20 bis 25,
    **dadurch gekennzeichnet,** daß als Feststoff Silikate verwendet werden.

27. Verfahren nach einem oder mehreren der Ansprüche 20 bis 26,
    **dadurch gekennzeichnet,** daß als Feststoff Aluminate verwendet werden.

28. Verfahren nach einem oder mehreren der Ansprüche 20 bis 27,
    **dadurch gekennzeichnet,** daß als Feststoff gemahlene Kunststoffe verwendet werden.

29. Verfahren nach einem oder mehreren der Ansprüche 20 bis 28,
    **dadurch gekennzeichnet,** daß die mit Gallium beladenen feinteiligen Trägerstoffteilchen bis zur Sättigung homogen in dem Wärmeträgermedium dispergiert werden.

30. Verfahren nach einem oder mehreren der Ansprüche 20 bis 29,
    **dadurch gekennzeichnet,** daß bei Verwendung von kristallinen Glykolen als Wärmeträgermedium diese vor dem Dispergieren über ihren Schmelzpunkt zur Bildung einer flüssigen Glykolphase erhitzt werden.

31. Verfahren nach Anspruch 30,
    **dadurch gekennzeichnet,** daß der flüssigen Glykolphase Siliciumdioxid beigemischt wird.

32. Verfahren nach einem oder mehreren der Ansprüche 20 bis 31,
    **dadurch gekennzeichnet,** daß eine Galliumlegierung verwendet wird.

33. Verfahren nach Anspruch 32,
    **dadurch gekennzeichnet,** daß der Schmelzpunkt des als Wärmeträgermedium zu verwendenden kristallinen Glykols eingestellt wird, oder auf dem mittleren oder höheren Arbeitstemperaturbereich des Wärmeträgermediums eines Kollektors liegt.

34. Verfahren nach Anspruch 33,
    **dadurch gekennzeichnet,** daß als kritallines Glykol ein Polyethylenglykol verwendet wird.

35. Verfahren nach einem oder mehreren der Ansprüche 20 bis 34,
    **dadurch gekennzeichnet,** daß Graphit zugemischt wird.

36. Verfahren nach Anspruch 35,
    **dadurch gekennzeichnet,** daß das Graphit eine Partikelgröße von ≤ 5μm besitzt.

37. Verfahren nach einem oder mehreren der Ansprüche 20 bis 36, dadurch gekennzeichnet, daß die Geschwindigkeit des Mahlflügels des Hochgeschwindigkeitshomogenisators etwa 18.000 UpM beträgt.

**38.** Verfahren nach einem oder mehreren der Ansprüche 20 bis 37,
**dadurch gekennzeichnet,** daß weiterhin ein Stabilisierungsmittel und/oder ein Dispergierhilfsmittel verwendet wird.

**39.** Verfahren nach einem oder mehreren der Ansprüche 20 bis 38,
**dadurch gekennzeichnet,** daß das Stabilisierungsmittel ausgewählt wird aus anionischen und/oder kationischen Tensiden, Polyacrylsäuren und Gelen und das Dispergierhilfsmittel aus niedrigviskosem Glykol, Glykolether oder niedrigviskosem Silikonöl.

**40.** Verfahren nach Anspruch 38 oder 39,
**dadurch gekennzeichnet,** daß als Stabilisierungsmittel, Guar-Mehl und/oder Johannisbrotkernmehl und als Dispergierhilfsmittel Triethylenglykol oder Ethylenglykolmonobutylether verwendet wird.

**41.** Verfahren nach einem oder mehreren der Ansprüche 20 bis 40,
**dadurch gekennzeichnet,** daß eine Dispergierzeit von 5 Minuten gewählt wird.

**42.** Wärmeträgermischung enthaltend ein Wärmeträgerkonzentrat nach einem oder mehreren der Ansprüche 1 bis 19, insbesondere nach Anspruch 1, sowie ein Wärmeträgermedium.

**43.** Wärmeträgermischung nach Anspruch 42,
**dadurch gekennzeichnet,** daß das Wärmeträgermedium ausgewählt ist aus flüssigen, kristallinen oder pastösen Glykolen, niedrigviskosen Silikonölen und synthetischen Ölen.

**44.** Wärmeträgermischung nach Anspruch 42 oder 43,
**dadurch gekennzeichnet,** daß in einem Liter Wärmeträgermedium 2 bis 8g Wärmeträgerkonzentrat enthalten sind.

**45.** Verwendung der Wärmeträgermischung nach einem oder mehreren der Ansprüche 42 bis 44 für die Speicherung und den Transport von Wärme in Reaktoren mit Wärmeaustauschern.

**46.** Verwendung der Wärmeträgermischung nach einem der Ansprüche 42 bis 44 für den Einsatz bei Wärmepumpen.

**47.** Verwendung der Wärmeträgermischung nach einem oder mehreren der Ansprüche 42 bis 44 als Medium zur thermochemischen Energiespeicherung.

**48.** Latentwärmespeicher umfassend einen Speicherbehälter (1), einen primären Heizkreis (2) einen sekundären Heizkreis (3) zum Entnehmen der in einem Wärmespeichermedium (4) latent gespeicherten Wärme,
**dadurch gekennzeichnet,** daß das Wärmespeichermedium (4) aus einer Wärmeträgermischung nach einem oder mehreren der Ansprüche 42 bis 44 besteht.

## Claims

**1.** Heat-transfer concentrate, characterized by a storage-stable dispersion of a heat-transfer medium and gallium which has been adsorbed on at least one finely particulate and/or highly porous solid.

**2.** Heat-transfer concentrate according to Claim 1, characterized in that the heat-transfer medium is selected from the group consisting of liquid, crystalline or pasty glycols, low-viscosity silicone oils and synthetic oils.

**3.** Heat-transfer concentrate according to Claim 1 or 2, characterized in that it contains zeolites as solid.

**4.** Heat-transfer concentrate according to Claim 3, characterized in that the zeolites have a particle diameter of from 1 to 3 μm, in particular of from 1.5 μm to 2.1 μm.

**5.** Heat-transfer concentrate according to Claim 3 or 4, characterized in that the zeolites have a pore diameter of from 0.2 to 0.6 nm, in particular of from 0.3 to 0.5 nm.

**6.** Heat-transfer concentrate according to one or more of Claims 1 to 5, characterized in that it contains hydrophilic or hydrophobic silicon dioxide or a mixture thereof as solid.

7.  Heat-transfer concentrate according to one or more of Claims 1 to 6, characterized in that it contains silicates as solid.

8.  Heat-transfer concentrate according to one or more of Claims 1 to 7, characterized in that it contains aluminates as solid.

9.  Heat-transfer concentrate according to one or more of Claims 1 to 8, characterized in that it contains ground plastics as solid.

10. Heat-transfer concentrate according to one or more of Claims 1 to 9, characterized in that it also contains a stabilizing agent and/or a dispersing aid.

11. Heat-transfer concentrate according to Claim 10, characterized in that the stabilizing agent is selected from the group consisting of anionic and/or cationic surfactants, polyacrylic acids and gels, and the dispersing aid is a low-viscosity glycol, a glycol ether or a low-viscosity silicone oil.

12. Heat-transfer concentrate according to Claim 10 or 11, characterized in that the stabilizing agent is guar meal and/or carob meal and the dispersing aid is triethylene glycol or ethylene glycol monobutyl ether.

13. Heat-transfer concentrate according to one or more of Claims 1 to 12, characterized in that it additionally contains graphite particles.

14. Heat-transfer concentrate according to Claim 13, characterized in that the graphite particles have a grain size of < 5 µm.

15. Heat-transfer concentrate according to one or more of Claims 1 to 14, characterized in that it contains an oxidation stabilizer.

16. Heat-transfer concentrate according to Claim 15, characterized in that the oxidation stabilizer is selected from the group consisting of trimethyl dihydroquinoline, diphenylamine derivatives, phenothiazine and phenyl-$\alpha$-naphthylamine.

17. Heat-transfer concentrate according to one or more of Claims 1 to 16, characterized in that it contains a gallium alloy.

18. Heat-transfer concentrate according to Claim 17, characterized in that the melting point of the gallium alloy corresponds to the melting point of a crystalline glycol used as heat-transfer medium or lies in the medium or higher working temperature range of the heat-transfer medium of a collector.

19. Heat-transfer concentrate according to one or more of Claims 2 to 18, characterized in that the crystalline glycol is polyethylene glycol (PEG).

20. Process for preparing a heat-transfer concentrate according to one or more of Claims 1 to 19, in particular according to Claim 1, characterized in that a heat-transfer medium is mixed with at least one finely particulate and/or highly porous solid and gallium, preferably in liquid form, and in the resultant mixture gallium is caused to be homogeneously adsorbed on the finely particulate and/or highly porous solid under the action of a high mixing energy, for example using a high-speed homogenizer, and the gallium-laden, finely particulate and/or highly porous solid particles are homogeneously dispersed.

21. Process according to Claim 20, characterized in that the heat-transfer medium used is liquid, crystalline or pasty glycols, low-viscosity silicone oils or synthetic oils.

22. Process according to Claim 20 or 21, characterized in that zeolites are used as solid.

23. Process according to Claim 22, characterized in that zeolites which have a particle diameter of 1 to 3 µm, in particular of 1.5 to 2.1 µm, are used.

24. Process according to Claim 22 or 23, characterized in that zeolites which have a pore diameter of 0.2 to 0.6 nm, in particular of 0.3 to 0.5 nm, are used.

25. Process according to one or more of Claims 20 to 24, characterized in that hydrophilic or hydrophobic silicon dioxide or a mixture thereof is used as solid.

26. Process according to one or more of Claims 20 to 25, characterized in that silicates are used as solid.

27. Process according to one or more of Claims 20 to 26, characterized in that aluminates are used as solid.

28. Process according to one or more of Claims 20 to 27, characterized in that ground plastics are used as solid.

29. Process according to one or more of Claims 20 to 28, characterized in that the gallium-laden, finely particulate carrier particles are homogeneously dispersed in the heat-transfer medium until saturation point is reached.

30. Process according to one or more of Claims 20 to 29, characterized in that, if crystalline glycols are used as heat-transfer medium, they are heated to above their melting point before being dispersed, in order to form a liquid glycol phase.

31. Process according to Claim 30, characterized in that silicon dioxide is admixed with the liquid glycol phase.

32. Process according to one or more of Claims 20 to 31, characterized in that a gallium alloy is used.

33. Process according to Claim 32, characterized in that the melting point of the crystalline glycol which is to be used as heat-transfer medium is established or the temperature is set to the medium or higher working temperature range of the heat-transfer medium of a collector.

34. Process according to Claim 33, characterized in that the crystalline glycol used is a polyethylene glycol.

35. Process according to one or more of Claims 20 to 34, characterized in that graphite is admixed.

36. Process according to Claim 35, characterized in that the graphite has a particle size of $\leq 5$ $\mu$m.

37. Process according to one or more of Claims 20 to 36, characterized in that the speed of the grinding blade of the high-speed homogenizer is approximately 18 000 rpm.

38. Process according to one or more of Claims 20 to 37, characterized in that a stabilizing agent and/or a dispersing aid are also used.

39. Process according to one or more of Claims 20 to 38, characterized in that the stabilizing agent is selected from the group consisting of anionic and/or cationic surfactants, polyacrylic acids and gels, and the dispersing aid is selected from the group consisting of low-viscosity glycol, glycol ether or low-viscosity silicone oil.

40. Process according to Claim 38 or 39, characterized in that the stabilizing agent used is guar meal and/or carob meal and the dispersing aid used is triethylene glycol or ethylene glycol monobutyl ether.

41. Process according to one or more of Claims 20 to 40, characterized in that a dispersion time of 5 minutes is selected.

42. Heat-transfer mixture containing a heat-transfer concentrate according to one or more of Claims 1 to 19, in particular according to Claim 1, and a heat-transfer medium.

43. Heat-transfer mixture according to Claim 42, characterized in that the heat-transfer medium is selected from the group consisting of liquid, crystalline or pasty glycols, low-viscosity silicone oils and synthetic oils.

44. Heat-transfer mixture according to Claim 42 or 43, characterized in that from 2 to 8 g of heat-transfer concentrate are contained in one litre of heat-transfer medium.

45. Use of the heat-transfer mixture according to one or more of Claims 42 to 44 to store and transport heat in reactors with heat exchangers.

46. Use of the heat-transfer mixture according to one of Claims 42 to 44 for use in heat pumps.

47. Use of the heat-transfer mixture according to one or more of Claims 42 to 44 as a medium for thermochemical energy storage.

48. Latent-heat storage device comprising a storage vessel (1), a primary heating circuit (1), a secondary heating circuit (3) for removal of the heat latently stored in a heat-transfer medium (4), characterized in that the heat-storage medium (4) comprises a heat-transfer mixture according to one or more of Claims 42 to 44.

**Revendications**

1. Concentré de caloporteurcaractérisé par une dispersion stable au stockage d'un milieu caloporteur et de gallium adsorbé par au moins un solide finement divisé et/ou à haute porosité.

2. Concentré de caloporteur selon la revendication 1, caractérisé en ce que le fluide caloporteur est choisi parmi les glycols liquides, cristallins ou pâteux, les huiles de silicone à faible viscosité et les huiles synthétiques.

3. Concentré de caloporteur selon la revendication 1 ou 2, caractérisé en ce qu'il contient en tant que solide des zéolites.

4. Concentré de caloporteur selon la revendication 3, caractérisé en ce que les zéolites ont une granulométrie de 1 à 3 µm, en particulier de 1,5 à 2,1 µm.

5. Concentré de caloporteur selon la revendication 3 ou 4, caractérisé en ce que les zéolites ont un diamètre des pores de 0,2 à 0,6 nm, en particulier de 0,3 à 0,5 nm.

6. Concentré de caloporteur selon l'une ou plusieurs des revendications 1 à 5, caractérisé en ce qu'il contient en tant que solide un dioxyde de silicium hydrophile ou hydrophobe ou un mélange de ces derniers.

7. Concentré de caloporteur selon l'une ou plusieurs des revendications 1 à 6, caractérisé en ce qu'il contient en tant que solide des silicates.

8. Concentré de caloporteur selon l'une ou plusieurs des revendications 1 à 7, caractérisé en ce qu'il contient en tant que solide des aluminates.

9. Concentré de caloporteur selon l'une ou plusieurs des revendications 1 à 8, caractérisé en ce qu'il contient en tant que solide des plastiques broyés.

10. Concentré de caloporteur selon l'une ou plusieurs des revendications 1 à 9, caractérisé en ce qu'il contient en outre un agent de stabilisation et/ou un auxiliaire de dispersion.

11. Concentré de caloporteur selon la revendication 10, caractérisé en ce que le moyen de stabilisation est choisi parmi les tensioactifs anioniques et/ou cationiques, les poly-acides acryliques et les gels, et auxiliaire de dispersion est un glycol à faible viscosité, un éther de glycol ou une huile de silicone à faible viscosité.

12. Concentré de caloporteur selon la revendication 10 ou 11, caractérisé en ce l'agent de stabilisation est une farine de guar et/ou une farine de caroube, et l'auxiliaire de dispersion est le triéthylèneglycol ou l'éther monobutylique de l'éthylèneglycol.

13. Concentré de caloporteur selon l'une ou plusieurs des revendications 1 à 12, caractérisé en ce qu'il contient en outre des particules de graphite.

14. Concentré de caloporteur selon la revendication 13, caractérisé en ce que les particules de graphite ont une granulométrie inférieure à 5 µm.

**15.** Concentré de caloporteur selon l'une ou plusieurs des revendications 1 à 14, caractérisé en ce qu'il contient un stabilisant à l'oxydation.

**16.** Concentré de caloporteur selon la revendication 15, caractérisé en ce que le stabilisant à l'oxydation est choisi parmi la triméthyldihydroquinoléine, les dérivés de diphénylamine, la phénothiazine et la phényl-$\alpha$-naphtylamine.

**17.** Concentré de caloporteur selon l'une ou plusieurs des revendications 1 ou 16, caractérisé en qu'il contient un alliage de gallium.

**18.** Concentré de caloporteur selon la revendication 17, caractérisé en que le point de fusion de l'alliage de gallium coïncide avec le point de fusion d'un glycol cristallin utilisé en tant que guide caloporteur, ou encore se trouve dans la plage moyenne ou supérieure de températures de travail du fluide caloporteur d'un collecteur.

**19.** Concentré de caloporteur selon l'une ou plusieurs des revendications 1 à 18, caractérisé en ce que le glycol cristallin est le polyéthylèneglycol (PEG).

**20.** Procédé de fabrication d'un concentré de caloporteur selon l'une ou plusieurs des revendications 1 à 19, en particulier selon la revendication 1, caractérisé en ce qu'on mélange un milieu caloporteur à au moins un solide finement divisé et/ou à haute porosité et à du gallium, de préférence sous forme liquide, et, dans le mélange obtenu, et sous l'action d'une énergie élevée de mélange, par exemple par utilisation d'un homogénéisateur à grande vitesse, on amène le gallium à être adsorbé d'une manière homogène par le solide finement divisé et/ou à haute porosité, et on disperse jusqu'à homogénéité les particules solides finement divisées et/ou à haute porosité, chargées de gallium.

**21.** Procédé selon la revendication 20, caractérisé en ce qu'on utilise en tant que fluide caloporteur des glycols liquides, cristallins ou pâteux, des huiles de silicone à faible viscosité et des huiles synthétiques.

**22.** Procédé selon la revendication 20 ou 21, caractérisé en ce qu'on utilise en tant que solide des zéolites.

**23.** Procédé selon la revendication 22, caractérisé en ce qu'on utilise des zéolites ayant une granulométrie de 1 à 3 µm, en particulier de 1,5 à 2,1 µm.

**24.** Procédé selon la revendication 22 ou 23, caractérisé en ce qu'on utilise des zéolites ayant un diamètre des pores de 0,2 à 0,6 nm, en particulier de 0,3 à 0,5 nm.

**25.** Procédé selon l'une ou plusieurs des revendications 20 à 24, caractérisé en ce qu'on utilise en tant que solide un dioxyde de silicium hydrophile ou hydrophobe ou un mélange de ces derniers.

**26.** Procédé selon l'une ou plusieurs des revendications 20 à 25, caractérisé en ce qu'on utilise en tant que solide des silicates.

**27.** Procédé selon l'une ou plusieurs des revendications 20 à 26, caractérisé en ce qu'on utilise en tant que solide des aluminates.

**28.** Procédé selon l'une ou plusieurs des revendications 20 à 27, caractérisé en ce qu'on utilise en tant que solide des plastiques broyés.

**29.** Procédé selon l'une ou plusieurs des revendications 20 à 28, caractérisé en ce que les particules de support finement divisées, chargées de gallium, sont dispersées jusqu'à saturation et jusqu'à homogénéité dans le milieu caloporteur.

**30.** Procédé selon l'une ou plusieurs des revendications 20 à 29, caractérisé en ce que, lors de l'utilisation de glycols cristallins en tant que fluide caloporteur, on les chauffe, avant dispersion, au-delà de leur point de fusion pour former une phase glycol liquide.

**31.** Procédé selon la revendication 30, caractérisé en ce qu'on mélange du dioxyde de silicium à la phase glycol liquide.

**32.** Procédé selon l'une ou plusieurs des revendications 20 à 31, caractérisé en ce qu'on utilise un alliage de gallium.

33. Procédé selon la revendication 32, caractérisé en ce que le point de fusion du glycol cristallin devant être utilisé en tant que fluide caloporteur est ajusté, ou encore se trouve dans la plage moyenne ou supérieure de température de travail du fluide caloporteur d'un collecteur.

34. Procédé selon la revendication 33, caractérisé en ce qu'on utilise en tant que glycol cristallin un polyéthylèneglycol.

35. Procédé selon l'une ou plusieurs des revendications 20 à 34, caractérisé en ce qu'on ajoute du graphite.

36. Procédé selon la revendication 35, caractérisé en ce que le graphite a une granulométrie ≤ 5 μm.

37. Procédé selon l'une ou plusieurs des revendications 20 à 36, caractérisé en ce que la vitesse de la pale broyeuse de l'homogénéisateur à grande vitesse est d'environ 18 000 tours/mn.

38. Procédé selon l'une ou plusieurs des revendications 20 à 37, caractérisé en ce qu'on utilise en outre un agent de stabilisation et/ou un auxiliaire de dispersion.

39. Procédé selon l'une ou plusieurs des revendications 20 à 38, caractérisé en ce que l'agent de stabilisation est choisi parmi les tensioactifs anioniques et/ou cationiques, les poly(acides acryliques) et les gels, et l'auxiliaire de dispersion est choisi parmi le glycol à faible viscosité, les éthers de glycol ou les huiles de silicone à faible viscosité.

40. Procédé selon la revendication 38 ou 39, caractérisé en ce qu'on utilise en tant qu'agent de stabilisation une farine de guar et/ou une farine de caroube, et en tant qu'auxiliaire de dispersion du triéthylèneglycol ou l'éther monobutylique de l'éthylèneglycol.

41. Procédé selon l'une ou plusieurs des revendications 20 à 40, caractérisé en ce qu'on choisit un temps de dispersion de 5 mn.

42. Mélange caloporteur contenant un concentré de caloporteur selon l'une ou plusieurs des revendications 1 à 19, en particulier selon la revendication 1, ainsi qu'un fluide caloporteur.

43. Mélange caloporteur selon la revendication 42, caractérisé en ce que le fluide caloporteur est choisi parmi les glycols liquides, cristallins ou pâteux, les huiles de silicone à faible viscosité et les huiles synthétiques.

44. Mélange caloporteur selon la revendication 42 ou 43, caractérisé en ce qu'un litre de milieu caloporteur contient de 2 à 8 g de concentré de caloporteur.

45. Utilisation du mélange caloporteur selon l'une ou plusieurs des revendications 42 à 44 pour l'accumulation et le transport de chaleur dans des réacteurs comportant des échangeurs de chaleur.

46. Utilisation du mélange caloporteur selon l'une des revendications 42 à 44 pour utilisation dans des pompes à chaleur.

47. Utilisation du mélange caloporteur selon l'une ou plusieurs des revendications 42 à 44 en tant que fluide pour l'accumulation thermochimique d'énergie.

48. Accumulateur de chaleur latente comportant un ballon accumulateur 1, un circuit primaire de chauffage (2), un circuit secondaire de chauffage (3) pour prélever la chaleur latente accumulée dans un fluide accumulateur de chaleur (4), caractérisé en ce que le fluide accumulateur de chaleur (4) est constitué d'un mélange caloporteur selon l'une des revendications 42 à 44.

*Fig. 1*

EP 0 802 958 B1